# EUROPEAN PATENT SPECIFICATION

(11) **EP 2 436 907 B1**
(45) Date of publication and mention of the grant of the patent: **22.10.2014**
(21) Application number: 11182322.5
(22) Date of filing: 22.09.2011
(51) Int. Cl.: F02M 37/04, F02M 37/14, F02M 37/00, B62J 37/00

(54) **Fuel feeding system of motorcycle**
Kraftstoffzuführsystem eines Motorrads
Système d'alimentation en carburant pour motocyclette

(30) Priority: 01.10.2010 JP 2010224087
(43) Date of publication of application: 04.04.2012
(73) Proprietor: Kawasaki Jukogyo Kabushiki Kaisha, Kobe-shi, Hyogo 650-8670 (JP)
(72) Inventor: Yamamoto, Tetsuji, Hyogo, 673-8666 (JP); Hiraga, Takashi, 21140 Rayong (TH)
(74) Representative: HOFFMANN EITLE

(56) References cited:
- EP-A1- 1 886 862
- EP-A2- 1 561 941
- JP-A- 2004 360 581
- US-A1- 2004 200 652

## Description

### BACKGROUND OF THE INVENTION

### 1. Field of the Invention

The present invention relates to a fuel feeding system of a motorcycle for feeding fuel from a fuel tank to a fuel feed portion of an engine.

### 2. Description of the Related Art

As systems for feeding fuel from a fuel tank to a fuel feed portion of an engine in a motorcycle, there are a gravity system for feeding fuel utilizing gravity caused by a head difference between the fuel tank and the fuel feed portion, and a fuel pump system for feeding fuel which is pressurized by a fuel pump to the fuel feed portion.

Recent motorcycles include, as the fuel feed portion, a throttle body and a fuel injector instead of a carburetor. In this case, since it is required to pressurize fuel and to feed the fuel to the fuel injector, the fuel pump system is widely utilized.

Japanese patent application laid-open No.2003-214274 discloses a motorcycle having a fuel pump of a so-called in-tank system. Namely, in said in-tank-system, the fuel pump is inserted into a fuel tank from an appropriate opening formed in the fuel tank, and is disposed in the fuel tank. A suction port of the fuel pump is disposed at a location as low as possible in the fuel tank so that air entrainment is not generated by the fuel pump when the amount of fuel remaining in the fuel tank is reduced.

From JP-A-2004 360581, a fuel feeding system according to the preamble of claim 1 is known.

Similar systems are known from both US-A1-2004/200652 and EP-A1-1 886 862.

Usually, a fuel pump is integrally provided with a pump body, a regulator, a filter and an oil pipe as a unit, and if such a fuel pump is disposed in the fuel tank, a substantial capacity of the fuel tank is reduced, and it takes labor to mount and dismount the fuel pump. Especially when a cross section of the fuel tank has an inverted U-shape such that it straddles a single frame member, a disposition space and a mounting location for the fuel pump in the fuel tank are restricted, and flexibility of design of the fuel feeding system is restricted.

On the other hand, if the fuel pump is merely disposed outside of the fuel tank, the fuel pump is exposed outside, an outward appearance of the motorcycle is deteriorated. Moreover, there is fear that the fuel pump and other vehicle equipment interfere with each other, fuel leaks outside from the fuel pump and a foreign matter collides against the motorcycle during running.

### 4. Objects of the Invention

It is an object of the present invention to provide a fuel feeding system of a motorcycle capable of securing a capacity of a fuel tank, capable of easily mounting and dismounting the fuel pump, and capable of protecting a fuel pump from outside without deteriorating the outward appearance.

### SUMMARY OF THE INVENTION

To solve the above problem, according to the present invention, a fuel pump which pumps fuel from the fuel tank into a fuel feed portion of the engine is mounted outside of the fuel tank, and the fuel pump is covered with a fuel pump cover.

The fuel pump and the fuel pump cover are individually fixed to the fuel tank, and one or more dampers are interposed between an outer surface of the fuel pump and an inner surface of the fuel pump cover, and the fuel pump is pressed by the fuel pump cover through the dampers. More preferably, the dampers are disposed at a plurality of locations at a distance from each other in a front-back direction of the fuel feeding system.
In the invention, in addition to the above-described configuration, the following configurations are preferably applicable.
(a) The fuel pump cover further covers at least a joint pipe connecting the fuel pump and the fuel hose with each other.
(b) A plurality of engage projections are formed on the fuel pump cover, the engage projections project upward and are provided at their upper ends with engaging expanded portions, and a mounting bracket having a plurality of engaging holes with which the engage projections can engage are provided on the fuel tank. In this case, it is preferable that the engage projections are formed on a front wall and right and left sidewalls of the fuel pump cover.
(c) The fuel pump is mounted on a lower side of a base plate of the fuel tank.
(d) A a notch for electric wiring which opens inward in a vehicle width direction is formed in the fuel pump cover.

### EFFECTS OF THE INVENTION

(1) According to the present invention, since the fuel pump is mounted outside of the fuel tank, the substantial capacity of the fuel tank is not reduced as compared with the in-tank system fuel pump which is mounted in the fuel tank, and it becomes easily to mount and dismount the fuel pump. Since the fuel pump is covered with a fuel pump cover, the outward appearance of the vehicle is enhance. Moreover, the fuel pump does not directly interfere with other vehicle equipment and a foreign matter does not collide against the fuel pump.
(2) With the configuration (a), since the connected portion between the fuel pump and the joint pipe is also covered with the fuel pump cover, it is not possible to access the connected portion from outside and tampering can be prevented.
(3) With the above configuration of the invention, since the fuel pump and the fuel pump cover are individually fixed to the fuel tank, it is possible to inspect the fuel pump merely by dismounting the pump cover only. In this case, one or more dampers may be interposed between the fuel pump and the pump cover, therefore, it is possible to suppress vibration of the fuel pump by the damper and the pump cover and according to this, it is possible to enhance the durability of the fuel pump. Moreover, the plural dampers may be disposed at a plurality of locations at a distance from each other in the front-back direction, therefore, an air layer is formed between the fuel pump and the pump cover, this insulates heat from an engine, prevents a temperature rise of the fuel pump and reduces heat influence on a seal or the like.
(4) With the paragraph (b), since the several engage projections formed on the fuel pump cover are engaged with engage holes of the mounting bracket mounted on the fuel tank so that the fuel pump cover is fixed to the fuel tank, it is possible to easily mount the pump cover on the fuel tank. In this case, the engage projections may be formed on the front wall and the right and left sidewalls of the fuel pump cover, therefore the pump cover does not rattle in the front-back direction or the lateral direction and it is possible to easily mount the pump cover to the fuel tank.
(5) With the above configuration (c), since the fuel pump is mounted on a lower side of a base plate of the fuel tank, an upper surface of the fuel pump is covered with the fuel tank itself from above and the fuel pump can be protected.
(6) With the above configuration (d), since the electric wiring notch which opens inward in a width direction of the vehicle may formed in the fuel pump cover, therefore, it is possible to easily connect an electric wiring to a main harness disposed along a main frame member, and a length of the harness can be shortened.

### BRIEF DESCRIPTION OF THE DRAWINGS

Fig. 1 is a left side view of a motorcycle having a fuel feeding apparatus according to the present invention;
Fig. 2 is an enlarged perspective view of a fuel tank (especially base plate) from which a body portion is dismounted;
Fig. 3 is a vertical sectional view of a fuel pump and a fuel pump cover;
Fig. 4 is an exploded right side view of the fuel pump and the fuel pump cover;
Fig. 5 is a rear view of Fig. 4;
Fig. 6 is a bottom view of the fuel pump; and
Fig. 7 is a plan view of a mounting bracket (cover mounting plate) of the fuel pump cover.

### DETAILED DESCRIPTION OF THE INVENTION

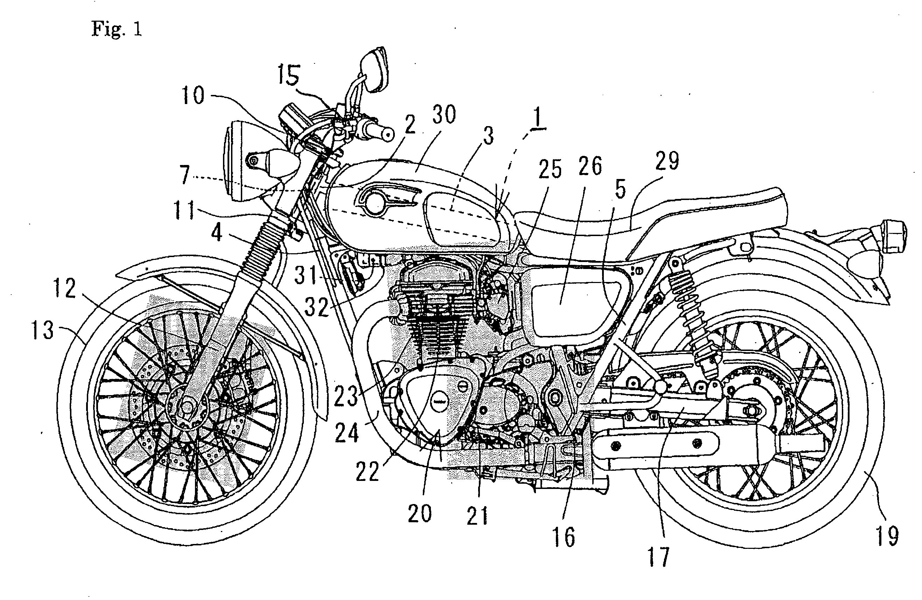

Figs. 1 to 7 show a fuel feeding apparatus of the present invention and a motorcycle having the fuel feeding apparatus, and an embodiment of the invention will be described with reference to the drawings.

### [Entire structure of motorcycle]

In Fig. 1 which is a left side view of the motorcycle, a main frame 1 includes an upper frame member 3 rearwardly extending from a head pipe 2, and a lower frame member 4 downwardly extending from the head pipe 2. A lower end of the lower frame member 4 extends rearward. The main frame 1 also includes a rear frame member 5 which connects a rear end of the upper frame member 3 and a rear end of the lower frame member 4 with each other. A pair of right and left front forks 12 is connected to a steering shaft 7 by means of upper and lower brackets 10 and 11. The steering shaft 7 is rotatably supported by the head pipe 2. A front wheel 13 is supported by lower ends of the front forks 12. A steering bar 15 is supported by the upper bracket 10. A swing arm 17 is supported by the rear frame member 5 through a swing shaft 16 such that the swing arm 17 can swing vertically, and a rear wheel 19 is supported by a rear end of the swing arm 17.

An engine 20 is arranged in a space surrounded by the upper frame member 3, the lower frame member 4 and the rear frame member 5. of the main frame 1. As is known, the engine 20 includes a crankcase 21, a cylinder 22 and a cylinder head 23 and the like. An exhaust pipe 24 is connected to an exhaust port formed in a front surface of the cylinder head 23, a throttle body 25 is connected to a suction port formed in a rear surface of the cylinder head 23, and a suction box 26 is connected to a rear side of the throttle body 25.

A fuel tank 30 is disposed on the upper frame member 3 such that the fuel tank 30 laterally straddles the upper frame member 3, and a seat 29 is disposed behind the fuel tank 30.

A fuel pump 31 and a fuel pump cover 32 which covers the fuel pump 31 are mounted on a lower side of a front portion of the fuel tank 30. The fuel pump cover 32 is made of resin such as polypropylene, polyethylene and polyvinyl chloride for example.

### [Fuel feeding system]

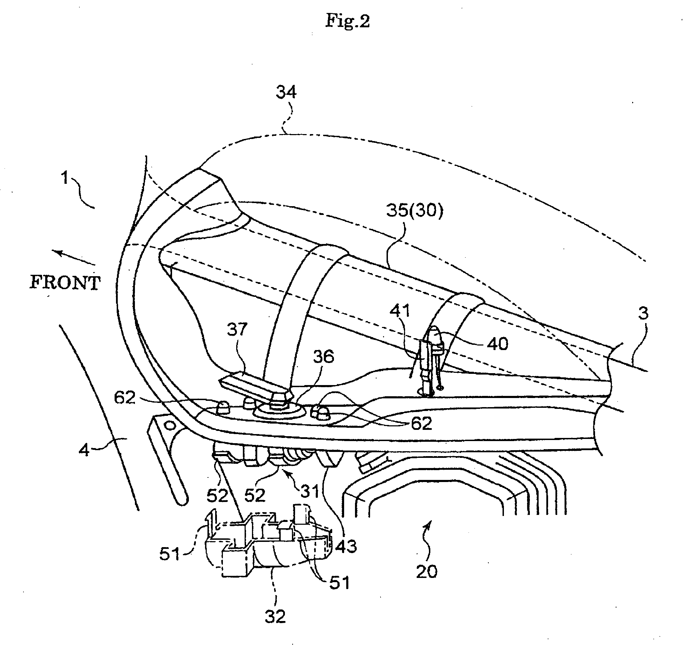

Fig. 2 is a perspective view of the fuel tank 30 from which a body portion (phantom line) 34 and the fuel pump cover (phantom line) 32 are dismounted. A base plate 35 of the fuel tank 30 laterally straddles the upper frame member 3, a central portion of the base plate 35 is made high and both right and left sides of the base plate 35 are made low. An opening 36 is formed in front portion of a left side of the base plate 35, and the fuel pump 31 is mounted on a lower side of the opening 36. A flat filter 37 provided on an upper end of the fuel pump 31 is inserted into the fuel tank 30 through the opening 36.

A thermistor 40 is disposed such that it is separated from the fuel pump 31. The thermistor 40 detects that an amount of fuel remaining in the fuel tank 30 becomes less than a predetermined level based on change in temperature. That is, the thermistor 40 is disposed on the left side in the fuel tank 30 behind the opening 36 at a given distance. The thermistor 40 is held by a support leg 41 fixed to the base plate 35 at a position higher than the base plate 35 by a given distance.

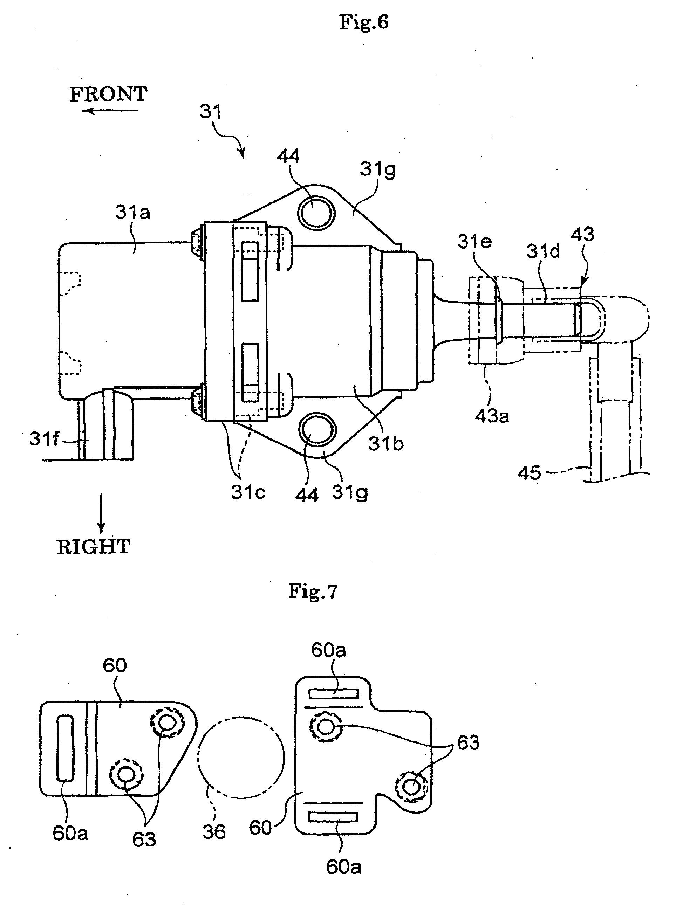

Fig. 6 is a bottom view of the fuel pump 31. The fuel pump 31 includes a first cylindrical portion 31a formed on a front half of the fuel pump 31, a second cylindrical portion 31b formed on a rear half of the fuel pump 31, intermediate rectangular portions (joint flanges) 31c formed between both the cylindrical portions 31a and 31b, and a discharge pipe 31d projecting rearward from a rear end of the second cylindrical portion 31b. A connecting terminal 31f projecting rightward (central side of a vehicle width) is formed on the first cylindrical portion 31a. The connecting terminal 31f is used for connecting an electric wire.

Mounting flanges 31g overhanging laterally are formed on both right and left sides of an upper end of the second cylindrical portion 31b, and bolt-insertion holes 44 are formed in the mounting flanges 31g, respectively. An outward flange 31e projecting radially-outwardly is formed on an intermediate portion of the discharge pipe 31d in its length direction (front-back direction), and the outward flange 31e prevents a joint pipe 43 connected to the discharge pipe 31d from falling out.

The joint pipe 43 is formed into an L-shape as viewed from above, and is bent rightward (inward of the vehicle width). A U-shaped clamping pawl 43a mounted on the joint pipe 43 clamps a front side of the flange 31e of the discharge pipe 31d, thereby engaging the clamping pawl 43a and the flange 31e with each other, and stopping the joint pipe 43 so that the joint pipe 43 is not pulled out rearward from the discharge pipe 31d. A fuel hose 45 is connected to a rear end of the L-shaped joint pipe 43. The fuel hose 45 extends rightward, reaches a side of the throttle body 25 shown in Fig. 1 and is connected to injectors of the throttle body 25.

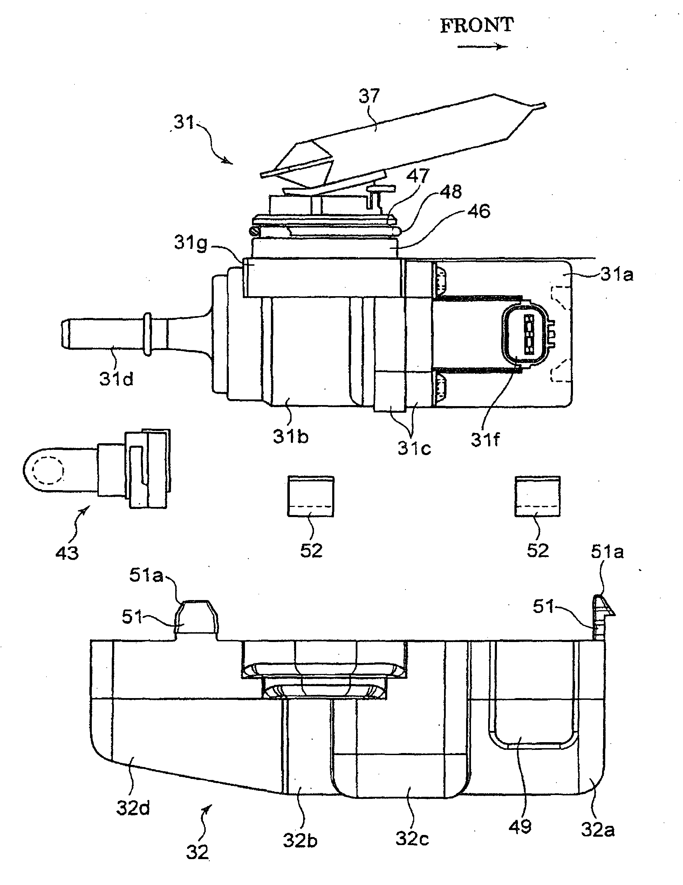

Fig. 4 is an exploded right side view of the fuel pump 31 and the fuel pump cover 32. A mounting cylindrical fitting portion 46 which projects upward is formed on upper surfaces of the second cylindrical portion 31b and rectangular portions 31c of the fuel pump 31. A fuel passage (not shown) formed in the fitting portion 46 is in communication with the filter 37. An annular groove 47 is formed in an outer peripheral surface of the fitting portion 46, and an O-ring 48 is fitted into the annular groove 47.

The fuel pump cover 32 includes a first partial cylindrical portion 32a formed on a front half of the fuel pump cover 32, a second partial cylindrical portion 32b formed on a rear half of the fuel pump cover 32, an intermediate rectangular portion 32c formed between both the partial cylindrical portions 32a and 32b, and a partial conical portion 32d projecting rearward from a rear end of the second partial cylindrical portion 32b. The first partial cylindrical portion 32a and the second partial cylindrical portion 32b formed into a substantially half-cylindrical shape.

A notch 49 is formed in a right side surface (inner side surface of the vehicle width) of the first partial cylindrical portion 32a of the fuel pump cover 32. A harness connector which is connected to the connecting terminal 31f of the fuel pump 31 is inserted through the notch 49.

When the fuel pump cover 32 is mounted, the first partial cylindrical portion 32a of the fuel pump cover 32 covers both right and left sides, a front side and a lower side of the first cylindrical portion 31a of the fuel pump 31, the second partial cylindrical portion 32b of the fuel pump cover 32 covers both right and left sides and a lower side of the second cylindrical portion 31b of the fuel pump 31, the rectangular portion 32c of the fuel pump cover 32 covers both right and left sides and a lower side of the rectangular portions 31c of the fuel pump 31, and the partial conical portion 32d of the fuel pump cover 32 covers both right and left sides and lower sides of the discharge pipe 31d of the fuel pump 31 and the fuel hose joint pipe 43.

Engage projections 51 which project upward are formed on an upper end of a front wall and upper ends of rear portions of right and left sidewalls of the fuel pump cover 32. Wedge-shaped claws (expanded portions) 51a are formed on upper ends of the engage projections 51 respectively and prevent the engage projections 51 from falling off.

When the fuel pump cover 32 is mounted, a pair of rubber dampers 52 is arranged on lower surfaces of the first and second cylindrical portions 31a and 31b of the fuel pump 31. The dampers 52 are made of plate like members and are formed into arc shape. The rubber dampers 52 are caught, at a certain pressure between outer peripheral surfaces of the cylindrical portions 31a and 31b of the fuel pump 31 and inner peripheral surfaces of the front and rear partial cylindrical portions 32a and 32b of the fuel pump cover 32.

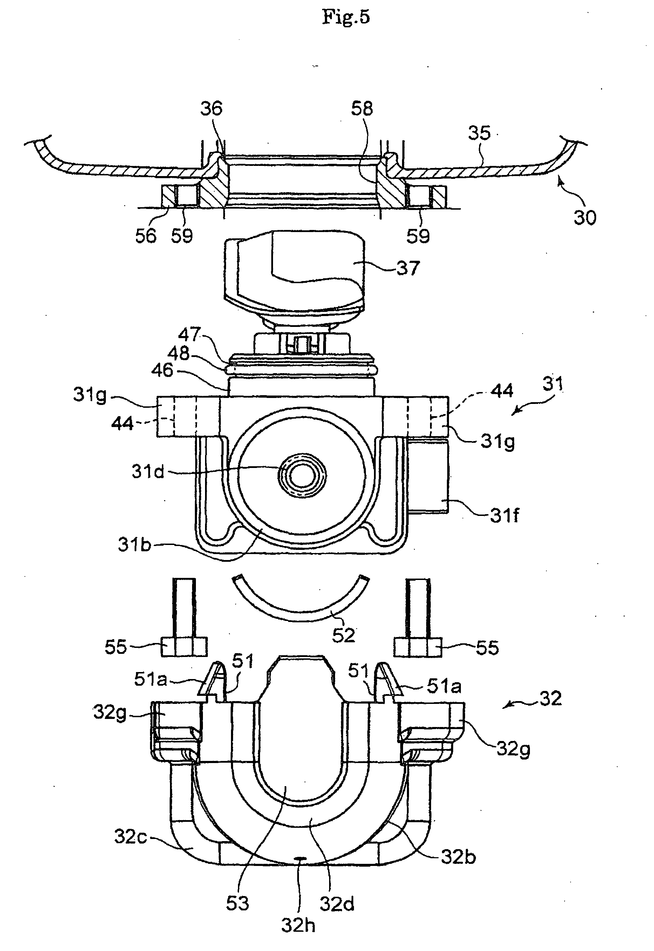

Fig. 5 is a rear view of Fig. 4. AU-shaped notch 53 is formed in a rear end wall of the partial conical portion 32d of the fuel pump cover 32. The joint pipe 43 (see Fig. 4 and the like) for the fuel hose projects into the U -shaped notch 53. Overhanging portions 32g are formed on right and left sides of an upper end of the second partial cylindrical portion 32b of the fuel pump cover 32. The overhanging portions 32g accommodate heads of mounting bolts 55 for mounting the fuel pump 31. A drainage hole 32h is formed in a bottom of the fuel pump cover 32.

A tank-side flange 56 for mounting the fuel pump is mounted on the opening 36 of the base plate 35 of the fuel tank 30, and the tank-side flange 56 is fixed to the base plate 35 by welding. The tank-side flange 56 includes a fitting hole 58 and female thread holes 59. The fitting hole 58 fits on the fitting portion 46 of the fuel pump 31, and the female thread holes 59 are formed at locations corresponding to the bolt-insertion holes 44 of the mounting flanges 31g of the fuel pump 31.

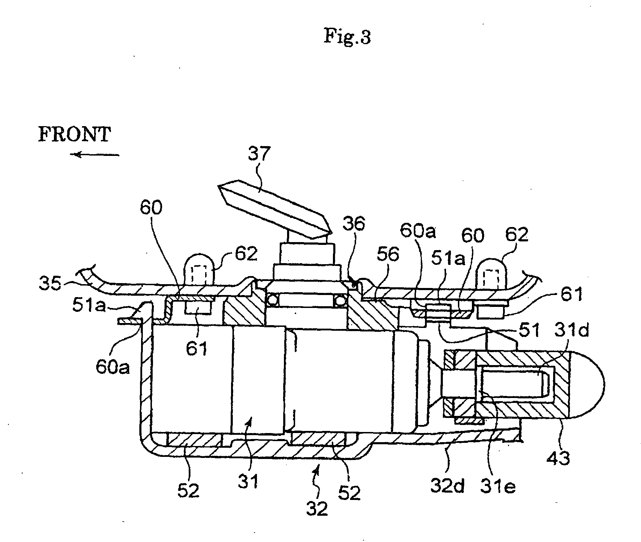

Fig. 3 is a vertical sectional view showing a state where the fuel pump 31 and the fuel pump cover 32 are mounted on the base plate 35 of the fuel tank 30. Cover mounting plates (mounting brackets) 60 are fixed to the base plate 35 of the fuel tank 30 at front and rear positions of the opening 36 by means of a plurality of bolts 61. Each of the cover mounting plates 60 includes a slit-like engage hole 60a. Nuts 62 are welded to an upper surface of the base plate 35, and the bolts 61 are screwed in the nuts 62. That is, the engage projections 51 of the fuel pump cover 32 are inserted into the engage holes 60a of the cover mounting plate 60 from below, the claws 51a are engaged with peripheral edges of the engage holes 60a, thereby fixing the fuel pump cover 32 to the cover mounting plate 60. At that time, the front and rear rubber dampers 52 are caught or sandwiched at a certain pressure between the inner peripheral surface of the fuel pump cover 32 and the outer peripheral surface of the fuel pump 31 as described above.

Each of the cover mounting plates 60 is bent into an L-or step shape such that the cover mounting plate 60 projects downward from a lower surface of the base plate 35 by a given distance. According to this, a space in which the head of the bolt 61 is accommodated is secured in the upper side of the fuel pump 31 when the fuel pump is mounted.

Fig. 7 is a plan view of the cover mounting plate 60. Each of the cover mounting plates 60 includes two bolt-insertion holes 63.

### (Assembling the fuel pump and the fuel pump cover of the embodiment)

(1) In Fig. 3, firstly, the fuel pump 31 is mounted to the lower side of the base plate 35 of the fuel tank 30 by fitting the fitting portion 46 on the fitting hole 58, then the front and rear rubber dampers 52 and fuel pump cover 32 are put on the fuel pump 31 from below, and the fuel pump p cover 32 is mounted on the base plate 35 of the fuel tank 30. That is, a total three engage projections 51 are inserted from below into the engage holes 60a of the corresponding cover mounting plates 60, and the claws 51a of the upper ends are engaged with peripheral edges of the engage holes 60a. At that time, the front and rear rubber dampers 52 are compressed, and the fuel pump 31 is resiliently pushed upward via the front and rear rubber dampers 52.
(2) The connected portion between the discharge pipe 31d of a rear end of the fuel pump 31 and the joint pipe 43 is also covered with the conical portion 32d of the fuel pump cover 32.
(3) A connector of a harness is inserted from the notch 49 formed in the first partial cylindrical portion 32a, and the connector is connected to the connecting terminal 31f.

### (Effect of embodiment)

(1) In this embodiment, since the fuel pump 31 is mounted on the lower side of the base plate 35 of the fuel pump 31 such that the fuel pump 31 projects downward, it is possible to secure a larger tank capacity as compared with the in-tank system fuel pump, and it becomes easy to mount and dismount the fuel pump 31. Further, since the fuel pump 31 is covered with the fuel pump cover 32, the outward appearance of the vehicle is enhanced. Moreover, the fuel pump 31 does not interfere with other vehicle equipment, and a foreign matter does not collide against the fuel pump 31 during running.
(2) Since the connected portion between the fuel pump 31 and the joint pipe 43 is also covered with the fuel pump cover 32, it is not possible to access the connected portion from outside and tampering can be prevented.
(3) The fuel pump 31 and the fuel pump cover 32 are individually fixed to the base plate 35 of the fuel tank 30 instead of mounting the fuel pump cover 32 to the fuel pump 31. Therefore, it is possible to inspect the fuel pump 31 and the like merely by dismounting only the fuel pump cover 32 from the fuel tank 30.
(4) Since the rubber dampers 52 are interposed between the outer peripheral surface of the fuel pump 31. and the inner peripheral surface of the fuel pump cover 32 in its compressed state, vibration of the fuel pump 31 can be suppressed by the rubber dampers 52 and the fuel pump cover 32, and durability of the fuel pump 31 can be enhanced.
(5) Since the rubber dampers 52 are disposed at two locations at a distance from each other in the front -back direction, the air layer can be formed between the fuel pump 31 and the fuel pump cover 32. According to this, it is possible to insulate heat from the engine 20, to prevent temperature of the fuel pump 31 from rising, and to reduce the thermal influence on the seal and the like.
(6) Since the several engage projections 51 formed on the fuel pump cover 32 are engaged with and fixed to the engage holes 60a of the cover mounting plate (mounting bracket) 60 mounted on the base plate 35 of the fuel tank 30, the fuel pump cover 32 can easily be mounted on the fuel tank 30.
(7) The engage projections 51 are formed on the front wall and the right and left sidewalls of the fuel pump cover 32, the fuel pump cover 32 can easily be mounted such that it does not rattle in the front-back direction and the lateral direction.
(8) Especially, since the fuel pump 31 is mounted on the lower side of the base plate 35 of the fuel tank 30, the fuel pump 31 is covered with the base plate 35 itself of the fuel tank 30 from above and the fuel pump 31 can be protected.
(9) Since the electric wiring notch 53 which opens inward in the vehicle width direction is formed in the fuel pump cover 32, it is possible to easily connect the electric wiring to the main harness which is disposed along the main frame 3.
(10) Since the drainage hole 32h is formed in the bottom of the fuel pump cover 32, water or soil is not accumulated in the fuel pump cover 32.

### [Other embodiments]

(1) Although the fuel pump 31 is mounted on the lower side of the base plate 35 of the fuel tank 30 in the embodiment, the present invention can also be applied to a system in which the fuel pump 31 is mounted on the outer peripheral surface (e.g. a side surface, top surface) of the body portion 34 of the fuel tank 30.
(2) The fuel pump cover 32 may be made of metal or resin (such as polyethylene and polyvinyl chloride) other than polypropylene resin.
(3) Three or more compressed rubber dampers 52 can be disposed between the fuel pump 31 and the fuel pump cover 32 at distances from one another in the longitudinal direction.
(4) The present invention can variously be modified and changed without departing from the scope of the invention described in patent claims.

## Claims

1. A fuel feeding system of a motorcycle for feeding fuel to an engine, **characterized in that**
a fuel pump (31) for pumping fuel from a fuel tank (30) into a fuel feed portion of the engine is mounted outside of the fuel tank (30), and the fuel pump (31) is covered with a fuel pump cover (32),
**characterized in that** the fuel pump (31) and the fuel pump cover (32) are individually fixed to the fuel tank (30), and one or more dampers are interposed between an outer surface of the fuel pump (31) and an inner surface of the fuel pump cover (32), and the fuel pump (31) is pressed by the fuel pump cover (32) through the dampers.

2. The fuel feeding system of the motorcycle according to claim 1, wherein
the fuel pump cover (32) further covers at least a joint pipe (43) connecting the fuel pump (31) and a fuel hose (45) with each other.

3. The fuel feeding system of the motorcycle according to claim 1, in which the plural dampers are individually disposed at a plurality of portions at a distance from each other in a front-back direction of the motorcycle.

4. The fuel feeding system of the motorcycle according to any one of claims 1 to 3, wherein
a plurality of engage projections (51) is formed on the fuel pump cover (32), the engage projections (51) project upward and are provided at their upper ends with engaging expanded portions, and
a mounting bracket having a plurality of engaging holes with which the engage projections (51) can engage are provided on the fuel tank (30).

5. The fuel feeding system of the motorcycle according to claim 4, wherein
the engage projections (51) are formed on a front wall and left and right sidewalls of the fuel pump cover (32).

6. The fuel feeding system of the motorcycle according to any one of claims 1 to 5, wherein
the fuel pump (31) is mounted on a lower side of a base plate (35) of the fuel tank (30).

7. The fuel feeding system of the motorcycle according to any one of claims 1 to 6, wherein
a notch for electric wiring which opens inward in a vehicle width direction is formed in the fuel pump cover (32).

## Patentansprüche

1. Ein Kraftstoffzuführungssystem eines Motorrads zum Zuführen von Kraftstoff an einen Motor, **dadurch gekennzeichnet, dass**
eine Kraftstoffpumpe (31) zum Pumpen des Kraftstoffs von einem Kraftstofftank (30) in einen Kraftstoffzuführungsabschnitt des Motors außerhalb des Kraftstofftanks (30) angebracht ist und die Kraftstoffpumpe (31) mit einer Kraftstoffpumpenabdeckung (32) abgedeckt ist **dadurch gekennzeichnet, dass**
die Kraftstoffpumpe (31) und die Kraftstoffpumpenabdeckung (32) einzeln an dem Kraftstofftank (30) angebracht sind und
ein oder mehr Dämpfer zwischen eine äußere Oberfläche der Kraftstoffpumpe (31) und eine innere Oberfläche der Kraftstoffpumpenabdeckung (32) eingefügt sind und die Kraftstoffpumpe (31) von der Kraftstoffpumpenabdeckung (32) durch die Dämpfer gedrückt wird.

2. Das Kraftstoffzuführungssystem des Motorrads nach Anspruch 1, wobei
die Kraftstoffpumpenabdeckung (32) ferner zumindest ein Verbindungsrohr (43) abdeckt, das die Kraftstoffpumpe (31) und einen Kraftstoffschlauch (45) miteinander verbindet.

3. Das Kraftstoffzuführungssystem des Motorrads nach Anspruch 1, wobei
die vielen Dämpfer einzeln an einer Vielzahl von Abschnitten in einem Abstand voneinander in einer Längsrichtung des Motorrads angeordnet sind.

4. Das Kraftstoffzuführungssystem des Motorrads nach einem der Ansprüche 1 bis 3, wobei
eine Vielzahl von Einrastnasen (51) auf der Kraftstoffpumpenabdeckung (32) ausgebildet ist, wobei die Einrastnasen (51) nach oben hervorstehen und an ihren oberen Enden mit ausgedehnten Einrastabschnitten versehen sind, und
eine Aufhängung, die eine Vielzahl von Einrastlöchern aufweist, mit welchen die Einrastnasen (51) einrasten können, an dem Kraftstofftank (30) vorgesehen ist.

5. Das Kraftstoffzuführungssystem des Motorrads nach Anspruch 4, wobei
die Einrastnasen (51) an einer vorderen Wand und linken und rechten Seitenwand der Kraftstoffpumpenabdeckung (32) ausgebildet sind.

6. Das Kraftstoffzuführungssystem des Motorrads nach einem der Ansprüche 1 bis 5, wobei
die Kraftstoffpumpe (31) an einer unteren Seite einer Grundplatte (35) von dem Kraftstofftank (30) angebracht ist.

7. Das Kraftstoffzuführungssystem des Motorrads nach einem der Ansprüche 1 bis 6, wobei
eine Aussparung für elektrische Verkabelung, welche sich nach innen in einer Fahrzeugbreitenrichtung öffnet, in der Kraftstoffpumpenabdeckung (32) ausgebildet ist.

## Revendications

1. Système d'alimentation en carburant d'une motocyclette permettant d'alimenter un moteur en carburant, **caractérisé en ce que**
une pompe à carburant (31) permettant de pomper le carburant à partir d'un réservoir de carburant (30) dans une partie d'alimentation en carburant du moteur est montée à l'extérieur du réservoir de carburant (30), et la pompe à carburant (31) est couverte avec un couvercle de pompe à carburant (32),
**caractérisé en ce que** la pompe à carburant (31) et le couvercle de pompe à carburant (32) sont fixés de manière individuelle sur le réservoir de carburant (30), et un ou plusieurs amortisseur(s) sont interposés entre une surface extérieure de la pompe à carburant (31) et une surface intérieure du couvercle de pompe à carburant (32), et la pompe à carburant (31) est pressée par le couvercle de pompe à carburant (32) à travers les amortisseurs.

2. Système d'alimentation en carburant de la motocyclette selon la revendication 1, dans lequel
le couvercle de pompe à carburant (32) couvre en outre au moins un tuyau de raccordement (43) reliant la pompe à carburant (31) et un tuyau de carburant (45) entre eux.

3. Système d'alimentation en carburant de la motocyclette selon la revendication 1, dans lequel la pluralité d'amortisseurs sont disposés de manière individuelle au niveau d'une pluralité de parties espacées les unes des autres dans une direction avant-arrière de la motocyclette.

4. Système d'alimentation en carburant de la motocyclette selon l'une quelconque des revendications 1 à 3, dans lequel
une pluralité de saillies d'engagement (51) est formée sur le couvercle de pompe à carburant (32), les saillies d'engagement (51) font saillie vers le haut et sont prévues au niveau de leurs extrémités supérieures avec des parties dilatées d'engagement, et
un support de montage ayant une pluralité de trous d'engagement avec lesquels les saillies d'engagement (51) peuvent s'engager, sont prévus sur le réservoir de carburant (30).

5. Système d'alimentation en carburant de la motocyclette selon la revendication 4, dans lequel
les saillies d'engagement (51) sont formées sur une paroi avant et sur des parois latérales gauche et droite du couvercle de pompe à carburant (32).

6. Système d'alimentation en carburant de la motocyclette selon l'une quelconque des revendications 1 à 5, dans lequel
la pompe à carburant (31) est montée sur un côté inférieur d'une plaque de base (35) du réservoir de carburant (30).

7. Système d'alimentation en carburant de la motocyclette selon l'une quelconque des revendications 1 à 6, dans lequel
une encoche pour un câblage électrique qui s'ouvre vers l'intérieur dans le sens de la largueur de véhicule est formée dans le couvercle de pompe à carburant (32).
